# EUROPÄISCHE PATENTSCHRIFT

(11) **EP 4 134 279 B1**
(45) Veröffentlichungstag und Bekanntmachung des Hinweises auf die Patenterteilung: **25.12.2024**
(21) Anmeldenummer: 22163726.7
(22) Anmeldetag: 23.03.2022
(51) Int. Cl.: B60R 1/06, B60R 1/076

(54) **INDIREKTES RÜCKSICHTSYSTEM MIT INDEXGEOMETRIE UMFASSEND EINE VERSTELLKUGEL MIT ÜBERDREHINDEXIERUNG**
INDIRECT REAR VIEW SYSTEM WITH INDEXING GEOMETRY COMPRISING AN ADJUSTMENT BALL WITH EXCESS ROTATION INDEXING
SYSTÈME INDIRECT DE RÉTROVISION À GÉOMÉTRIE D'INDEX COMPRENANT UNE ROTULE DE RÉGLAGE À INDEXATION DE SURVITESSE

(30) Priorität: 06.04.2021 DE 102021108506
(43) Veröffentlichungstag der Anmeldung: 15.02.2023
(73) Patentinhaber: MEKRA LANG GmbH & Co. KG, 91465 Ergersheim (DE)
(72) Erfinder: LANG, Werner, Dr., 91465 Ergersheim (DE); FINKENBERGER, Elmar, 91587 Adelshofen (DE); POPP, Albrecht, 91629 Weihenzell (DE)
(74) Vertreter: Winter, Brandl - Partnerschaft mbB

(56) Entgegenhaltungen:
- DE-A1- 102005 025 614
- DE-A1- 3 635 278
- DE-C1- 10 163 318
- US-A- 4 620 813
- US-A1- 2008 063 465

## Beschreibung

Die Erfindung betrifft ein indirektes Rücksichtsystem für ein Kraftfahrzeug, wie ein Nutzfahrzeug, eine Agrar- / Baumaschine, bspw. einen Traktor, oder etwa einen Lkw, einen Bus und/oder einen Transporter, mit einem Tragelement zum Befestigen wenigstens eines Reflexionselementes, wie einem Spiegelglas, wobei das Tragelement einen Koppelbereich zum lageveränderbaren Befestigen / Anbringen an einem seinerseits fahrzeuganbindbaren oder fahrzeugangebundenen Verstellelement besitzt, wobei der Koppelbereich einen Gegenkontaktbereich des Verstellelementes kontaktiert, wobei ferner am Tragelement und am Verstellelement ineinandergreifende Verdrehstopmittel vorhanden sind, etwa nach dem Nut- und -Feder-Prinzip.

Aus dem Stand der Technik sind verschiedene Verstelleinheiten bekannt. So geht auf die Anmelderin das deutsche Patent DE 101 63 318 C1 zurück. Dort ist eine Gelenkanordnung geschützt, nämlich eine Gelenkvorrichtung zur Anordnung von zwei Bauteilen im Winkel zueinander, insbesondere für Rückblickspiegel mit verstellbarer Spiegelscheibe, mit einem ersten Gelenkbauteil mit einer Kugelpfanne, einem zweiten Gelenkbauteil, das einen im wesentlichen kugelabschnittsförmigen Vorsprung aufweist, der in die Kugelpfanne eingepasst ist, einem Gleitteil, und einer Verbindungseinrichtung zum Herstellen einer Klemmverbindung zwischen erstem Gelenkbauteil, Gleitteil und zweitem Gelenkbauteil, wobei die einander zugewandten Seiten von Kugelpfanne, Gleitteil und Vorsprung jeweils eine konvexe Strukturierung und eine hierzu komplementär ausgebildete konkave Strukturierung aufweisen, wobei durch die Strukturierungen eine erste und eine zweite Drehachse zwischen Gleitteil, Kugelpfanne und Vorsprung festgelegt wird. Als Besonders ist herausgestellt, dass die konkave Strukturierung zumindest in entlastetem Zustand stärker gekrümmt ist als die konvexe Strukturierung.

Auf die Anmelderin geht auch das Europäische Patent EP 3 335 938 B1 zurück. In diesem Patent ist eine Kugelgelenkvorrichtung zur verstellbaren Anordnung von einem ersten und einem zweiten Gelenkbauteil um einen Drehpunkt geschützt. Dabei besitzt die patentierte Kugelgelenkvorrichtung ein Kugelflächenelement, an dem ersten Gelenkbauteil mit einer Außenseite, die Teil einer Kugelfläche ist und einen ersten Krümmungsradius mit einem ersten Mittelpunkt aufweist. Eine Eingriffseinrichtung an dem zweiten Gelenkbauteil, die das Kugelflächenelement mit einer ersten Kontaktfläche kontaktiert, ist ebenfalls vorhanden. Auch weist jene Vorrichtung eine innerhalb des Kugelflächenelementes angeordnete, konkave kugelkappenförmige Aufnahme an dem ersten oder zweiten Gelenkbauteil auf, die einen zweiten Krümmungsradius mit einem zweiten Mittelpunkt besitzt. Das zweite oder erste Gelenkbauteil weist eine konkave Kugelkappe auf. Das zweite oder erste Gelenkbauteil weist eine konvexe Kugelkappe auf, die sich mit einer zweiten Kontaktfläche in der kugelkappenförmigen Aufnahme abstützt. Dabei ist der erste Krümmungsradius größer als der zweite Krümmungsradius. Die Einsatzeinrichtung übergreift das Kugelflächenelement und die beiden Gelenkbauteile nach Art einer Druckknopfverbindung miteinander. Als Besonders ist in jenem älteren Patent unter Schutz gestellt, dass das Kugelflächenelement abschnittsweise kugelringförmig ausgebildet ist, und dass das Kugelflächenelement mehrere über den Umfang verteilte kugelringförmige Abschnitte aufweist.

Weiterer Stand der Technik der dem Oberbegriff des unabhängigen Anspruchs 1 entspricht, ist aus der JP 2018 - 154 287 A und der US 5 755 526 A bekannt.

Die JP 2018 - 154 287 A offenbart einen Seitenspiegel umfassend eine Stange, die an einer Spitze mit einem kugelförmigen Abschnitt versehen ist; ein Gehäuse, in dem in einem Verbindungsabschnitt an der eigenen Innenseite ein vertiefter kugelförmiger Oberflächenabschnitt vorgesehen ist, der mit einem Spiegeloberflächenkörper daran befestigt ist und in den der kugelförmige Abschnitt eingepasst ist; eine Halteplatte, die mit einem vertieften kugelförmigen Oberflächenabschnitt versehen ist, der mit dem vertieften kugelförmigen Abschnitt gepaart ist, gegenüber dem Verbindungsabschnitt angeordnet ist, um den kugelförmigen Abschnitt zwischen den gegenseitigen vertieften kugelförmigen Oberflächenabschnitten zu umgeben, und den kugelförmigen Abschnitt in dem Verbindungsabschnitt schwingungsfähig hält; und eine Schwingungsbereichsregulierungsplatte, die manuell und drehbar in einer horizontalen Richtung zwischen einer gehäuseseitigen Stütznut , die in dem Verbindungsabschnitt ausgebildet ist, und einer halterplattenseitigen Stütznut, die in der Halteplatte ausgebildet ist, gehalten wird und einen Schwingungsbereich des Gehäuses von einer nicht eingeschränkten Position zu einer maximal eingeschränkten Position reguliert.

Die US 5 755 526 A offenbart ein Kugelgelenk umfassend eine Pfanne mit einer Kammer. Ein Kugelzapfen umfasst ein Kugelende. Das Kugelende ist relativ zu der Pfanne in einer ersten Richtung in die Kammer in der Pfanne beweglich. Die Pfanne hat erste Abschnitte, die mit dem Kugelende in Eingriff gebracht werden können, um die Drehung des Kugelendes um eine erste Achse während der Bewegung des Kugelendes in die Kammer zu blockieren. Ein elastischer Halter wird während der Bewegung des Kugelkopfes in die Kammer ausgelenkt. Wenn sich das Kugelende in der Kammer befindet, richtet sich die Halterung auf, um das Kugelende in eine Betriebsposition in der Kammer zu drehen. Die Pfanne hat zweite Abschnitte, die mit dem Kugelkopf in Eingriff gebracht werden können, um die Bewegung des Kugelkopfes aus der Kammer zu blockieren, wenn sich der Kugelkopf in der Betriebsposition befindet. Der Eingriff des Halters in eine Halteröffnung in der Pfanne blockiert die Drehung des Kugelendes aus der Betriebsposition.

Es ist die Aufgabe der vorliegenden Erfindung, die aus dem Stand der Technik bekannten Nachteile zu mildern oder bestenfalls abzustellen.

Diese Aufgabe wird erfindungsgemäß dadurch gelöst, dass die Verdrehstopmittel eine Indexgeometrie ausbilden, die in einem ersten Betriebszustand eine Verstellung / ein Verschwenken des Tragelementes relativ zum Verstellelement um zwei quer zueinander, vorzugsweise orthogonal zueinander, stehende Drehachsen zulässt und in einem zweiten Betriebszustand eine Grundpositionsänderung / eine Verstellung / ein Verschwenken des Tragelementes relativ zum Verstellelement um eine dritte Drehachse zulässt, die quer zu den beiden anderen Drehachsen, vorzugsweise orthogonal zu diesen, ausgerichtet ist. Es gilt zu beachten, dass in allen Betriebszuständen, auch in diesem wenigstens zweiten Betriebszustand, eine "normale" Verstellung um die Vertikal-/Hochachse und eine erste Horizontal-/Querachse auch möglich bleibt, eben um eine Links-/Rechtsverstellung und Auf-/Abverstellung des Spiegels zu erreichen.

Unter Verdrehstopmittel werden solche Mittel verstanden, die in zumindest einem bestimmten Betriebszustand, insbesondere dem ersten Betriebszustand, eine Verdrehung des Tragelementes relativ zum Verdrehelement um eine bestimmte Drehachse verunmöglichen, wobei eine Verdrehung / Verschwenkung um zwei weitere dazu orthogonale Achsen ermöglicht bleibt.

Liegt ein Überdrehmoment oberhalb eines vorbestimmten Grenzdrehmomentes vor, kann eine erste Grundposition verlassen werden und nach einer Gleitbewegung des Tragelements relativ zum Verstellement eine zweite Grundposition eingenommen werden. Dort findet vorzugsweise ein Einrasten bspw. als Einschnappen statt.

In beiden Grundpositionen sind nur "normale" Verstellungen um die Hochachse und eine der beiden Querachsen möglich, eben um eine Links-/Rechtsverstellung und Auf-/Abverstellung des Spiegels zu erreichen.

In den Grundpositionen, von denen es auch mehr als zwei geben kann, verunmöglichen die Verdrehstopmittel ein Verschwenken um eine weitere Achse, d.h. um eine zweite Horizontal-/Querachse, die sowohl zur Vertikal- /Hochachse als auch zur ersten Horizontal-/Querachse orthogonal ausgerichtet ist.

Gerade für Spiegelsysteme, die an vielen verschiedenen Fahrzeugen verbaut werden, zeigt die Anzahl an geometrisch notwendigen Varianten, dass verschiedene Anbindungsgegebenheiten vorhanden sind. Dies kann z. B. bedeuten, dass eine Tragstruktur horizontal (auch links / rechts) auf einen Spiegelkopf angebunden werden muss und bei anderen Fahrzeugen eine vertikale (oben / unten) Anbindung bevorzugt ist. Dadurch entsteht eine Vielzahl von Varianten, die bereitgestellt werden müssen. Durch die Erfindung wird dies nun einfach ermöglicht. Es wird insbesondere ein indirektes Sichtsystem für ein Fahrzeug bereitgestellt, welches wenig geometrische Varianten aufweist und viele Anbindungen an verschiedenste Fahrzeuge oder Fahrzeugvarianten realisiert. Während üblicherweise Kugelverstellungen eingesetzt sind, die nach Art einer Nut-Feder-Verbindung verhindern, dass ein Spiegelkopf sich beim Verstellen (normales Einstellen des Sichtfeldes durch den Fahrer) um seine (meist annähernd horizontale) Kugelmittelachse verdreht, wird nun eine bedarfsgerechtere Lösung präsentiert. Die Nut-Feder-Verbindung kann nun auch in unterschiedlich geometrischer Form ausgestaltet sein, bspw. trapezförmig oder wellenförmig.

Mit anderen Worten betrifft die Erfindung ein indirektes Sichtsystem für ein Fahrzeug umfassend wenigstens ein Reflexionselement zur indirekten Sicht, einem Tragelement und einem Verstellelement, wobei das Tragelement das Reflexionselement aufnimmt, und wobei das Tragelement und das Verstellelement über kugelförmige Kontaktbereiche zueinander über einen Drehpunkt verschwenkbar sind, wobei das Besondere ist, dass über eine Indexgeometrie zwischen dem Verstellelement und dem Tragelement, z. B. nach Art einer Nut-Feder-Verbindung, radial um die Kugelmittelachse verschiedene Betriebspositionen zwischen dem Verstellelement und dem Tragelement vordefiniert / definiert werden können. Die Betriebspositionen können nach der Montage des Spiegelkopfes noch (frei) gewählt werden, da die Indexgeometrie elastisch ausgeführt ist.

Vorteilhafte Ausführungsformen sind in den Unteransprüchen beansprucht und werden nachfolgend näher erläutert.

So ist es bspw. von Vorteil, wenn das Tragelement und das Verstellelement von ihrer Geometrie, Materialstärke und Materialbeschaffenheit so aufeinander abgestimmt sind, dass bei Vorliegen eines Überdrehmoments, das größer als ein vorbestimmtes Grenzdrehmoment ist, der Übergang vom ersten Betriebszustand in den zweiten Betriebszustand freigegeben / erzwungen wird. Man könnte auch sagen, dass zum Erreichen einer wenigstens zweiten Betriebsposition ein Überdrehmoment erforderlich ist, das höher als das definierte Drehmoment zum Stabilhalten des Tragelements in der Indexgeometrie ist.

Dabei ist es von Vorteil, wenn das Verstellelement einen balligen Anschlussbereich besitzt, der den Gegenkontaktbereich ausbildet. Eine Verstellbarkeit in unterschiedliche Richtungen um bspw. die drei Drehachsen, ist dadurch einfach umsetzbar.

Dabei ist es besonders von Vorteil, wenn der ballige Anschlussbereich kugelabschnittsartige Abschnitte besitzt.

Hierbei ist es von Vorteil, wenn wenigstens eine erste Betriebsposition über die Kugelmittelachse um z.B. 90°, 45°, 30° (horizontal / vertikal / diagonal) zu wenigstens einer zweiten Betriebsposition erreicht wird. Somit kann eine nahezu horizontal ausgerichtete oder vertikal ausgerichtete Tragstruktur angebunden werden. Beispielsweise kann ein horizontales oder vertikales Rohr einfach angeschlossen werden. Ein nahezu horizontaler oder vertikaler oder diagonaler Tragstrukturabgang ist dann darstellbar. Es kann auch jeder andere Winkel umgesetzt werden.

Wenn der Kontaktbereich eine Schale ausbildet, die den balligen Anschlussbereich umgibt / beherbergt, so kann mit einfachen Mitteln ein Befestigungsprinzip nach Art eines Druckknopfes umgesetzt werden. Dies ist dem Montageablauf zuträglich und spart Zeit ein.

In puncto des Überdrehmomentes sei noch ergänzt, dass es von Vorteil ist, wenn das Überdrehmoment bevorzugt wenigstens ca. 7,5%, ca. 10 % oder ca. 25 % höher ist, als das definierte Drehmoment zum Stabilhalten des Tragelementes. Hierdurch ist es auch möglich, einen Kollisionsschutz durch Dämpfung und Nachgiebigkeit der Indexgeometrie zu erlangen. Das Überdrehmoment ist ergo höher als das vordefinierte Grenzdrehmoment. Oberhalb des Grenzdrehmomentes findet beispielsweise eine Freigabe einer Schnappverbindung statt. Nach der durchgeführten Verstellung findet wieder ein selbständiges Halten in der Indexgeometrie statt.

Vorteilhaft ist es auch, wenn die Indexgeometrie in Form einer Nut- und -Feder-Verbindung ausgeführt ist.

Wenn dabei die Nut im Tragelement und die Feder im Verstellelement integriert ist, oder die Nut im Verstellelement und die Feder im Tragelement integriert ist, so lassen sich bedarfsgerechte Lösungen umsetzen.

Dabei ist es auch von Vorteil, wenn die Indexgeometrie federnd ausgeführt ist bzw. wenigstens eines der beiden sie stellenden Bauteile.

Wenn die federnde Ausführung mittels Schlitze in den kugelförmigen Kontaktbereichen ausgeführt wird, so stellen sich Vorteile im Dauerbetrieb aber auch schon während der Montage ein.

Letztlich betrifft die Erfindung auch die Ausbildung des indirekten (Rück-)Sichtsystems nach Art eines Spiegelkopfes.

Das indirekte (Rück-)Sichtsystem kann insbesondere ein Kopfversteller oder Glasversteller sein.

Eine vorteilhafte Ausführungsform ist auch dadurch gekennzeichnet, dass das Tragelement und das Verstellelement gezielt so gestaltet sind, dass die Rückstelleigenschaften und das E-Modul der beiden Bauteile so auf die Kontur der ineinandergreifenden Indexgeometriebauteile abgestimmt sind, dass bei Vorliegen des Überdrehmoments der wenigstens zweite Betriebszustand zwangseingenommen wird. Bei Vorliegen des Überdrehmoments - oberhalb des vordefinierten Grenzdrehmoments - wird die bis dahin eingenommene Grundposition verlassen. Eine Bewegung zur zweiten Grundposition findet statt. Dort findet wieder ein Einrasten statt. Die für das selbständige Einrasten oder Einschnappen nötige Kraft kann durch die Rückstellkraft wenigstens eines der beiden die Indexgeometrie ausbildenden Bauteile aus elastischem Material gestellt werden.

Insbesondere hat es sich dabei bewährt, ein erstes Indexgeometriebauteil als eine Rille / Rinne / Riefe, bspw. nach Art einer Nut- und -Feder-Konfiguration, auszugestalten und ein zweites Indexgeometriebauteil als einen Vorsprung / eine Rippe / eine Erhöhung, bspw. nach Art einer Feder einer Nut- und -Feder-Konfiguration, auszugestalten.

Für eine Weiterbildung ist es von Vorteil, wenn die Rille / Rinne / Riefe am Tragelement, insbesondere auf seiner dem Verstellelement zugewandten (Innen-)Seite, vorhanden ist und der Vorsprung / die Rippe / die Erhöhung am Verstellelement, insbesondere auf seiner dem Tragelement zugewandten (Außen-)Seite, vorhanden ist bzw. vice versa.

Um auch einen Überlastschutz vorzuhalten und ein Abklappen im Notfall zuzulassen, ist es von Vorteil, wenn das Grenzdrehmoment ca. 10 % oder ca. 20 % oder ca. 30 % oder besonders bevorzugt ca. 33 % größer ist, als das im ersten Betriebszustand auftretende (normale) Drehmoment, das zum Stabilhalten des Tragelementes zum Verstellelement benötigt ist. Hier ist ein gezieltes Ausrichten / Abstimmen der Innengeometrie bspw. der Rinne / Rille / Riefe von Vorteil.

Ein präzises Verstellen ist dann darstellbar, wenn der Vorsprung spielfrei in die Rille / Rinne / Riefe eingreift bzw. in ihr gelagert ist. Allerdings ist ein Spiel von einigen wenigen 10tel Millimeter im Sinne einer Quasi-Spielfreiheit oder Nahezu-Spielfreiheit akzeptierbar. Diese Überlegungen sind insbesondere vor dem Hintergrund von Fertigungstoleranzen und einem Bauteilverzug zu berücksichtigen.

Eine vorteilhafte Ausführungsform ist auch dadurch gekennzeichnet, dass der Vorsprung in einem Querschnitt orthogonal zur Längsachse der Rille / Rinne / Riefe eine angeschrägte Seite besitzt, die zum Eingehen eines Linienkontakts mit dem die Rille / Rinne / Riefe ausbildenden Material konturiert ist. Durch die angeschrägte Seite und die elastische Indexgeometrie generiert sich das Grenzdrehmoment bzw. wird dadurch vorbestimmt. Beim Verlassen der ersten Grundposition muss eine schiefe Ebene überwunden werden. Das Verhältnis der Schräge zur Anpresskraft (vorgegeben durch das Widerstandsmoment bspw. einer Lasche) legt das Grenzdrehmoment fest.

Besonders bevorzugt ist es in diesem Zusammenhang, wenn der Vorsprung wenigsten im Wirkbereich, also dort, wo die beim und für das Verlassen der Grundposition notwendige Schräge vorhanden ist, eine Kegelkontur oder Kegelstumpfkontur oder kugelabschnittsartige Kontur oder sphärische / ellipsoide Kontur besitzt. Ein problemloses Verstellen in möglichst alle Raumrichtungen ist dann darstellbar. Der Wirkbereich kann nur in einem bestimmten Winkelbereich des Vorsprungs vorhanden sein und dann eben nur dort die besagte Schräge besitzen. In den anderen Winkelbereichen kann diese Schräge fehlen. Dort, wo die Schräge fehlt, ist kein Wirkbereich vorhanden. Mit anderen Worten ist wenigstens im Bereich jenes Winkelbereichs, in dem die Verstellung und ein "Heraushüpfen" erzwungen ist, eine "Wirkkontur" aufweisend die Schräge vorhanden. Aus Symmetriegründen und Fertigungsgründen kann die Schräge jedoch auch in jenen Winkelbereichen vorhanden sein, in denen kein Wirkbereich vorhanden ist.

Dabei ist es von Vorteil, wenn die Rille / Rinne / Riefe eine Tiefe besitzt, die zwischen ca. 10 % bis ca. 45 % der Dicke des Koppelbereiches beträgt.

Es hat sich bewährt, wenn die Indexgeometrie aus zwei Bauteilen zusammengesetzt ist, von denen wenigstens eines elastisch ausgebildet ist.

Auch ist es von Vorteil, wenn der Koppelbereich bspw. etwa zentrums- / mittelpunktsnah des Tragelementes vorhanden ist und zum beispielsweise druckbeaufschlagenden - etwa kraftschlusseingehenden und/oder formschlusseingehenden - Kontaktieren mit dem balligen Anschlussbereich des Verstellelementes, etwa nach Art einer Druckknopfkonfiguration, ausgebildet ist.

Vorteilhaft ist es auch, wenn der Koppelbereich einen ersten Kontaktbereich und einen dazu axial versetzten zweiten Kontaktbereich besitzt, wobei die Axialrichtung durch die Einsatzrichtung des Verstellelementes in das Tragelement oder eine Horizontalachse, vorzugsweise durch einen Drehpunkt, um den das Tragelement verschwenkbar ist, definiert ist.

Wenn durch einen Bereich des Übergangs eines Hauptkörpers des Tragelementes in den Koppelbereich eine gedachte Trennfläche ebene verläuft, so kann auf weiterführende Konfigurationen zurückgegriffen werden. Die Trennfläche kann plan, ergo als Trennebene ausgebildet sein. Die Trennfläche verläuft durch den Bereich des Übergangs vom Hauptkörper des Tragelements in den Koppelbereich des Tragelements beiderseits des Drehpunktes. Unterschiedliche räumliche Konfigurationen der Trennfläche sind möglich. Beispielsweise sind Freiflächengestaltungen umsetzbar. Insbesondere kann die Trennfläche plan, also eben, ausgebildet sein und formt in diesem Spezialfall dann eine Trennebene aus.

Eine dieser Konfigurationen stellt sich bspw. ein, wenn der erste Kontaktbereich einerseits der gedachten Trennfläche verläuft und der zweite Kontaktbereich andererseits der gedachten Trennfläche verläuft.

So ist es ferner von Vorteil, wenn der erste Kontaktbereich als ein innerer Kontaktbereich ausgebildet ist, der im Inneren eines durch das Tragelement und dem Reflexionselement definierten Raum liegt und der zweite Kontaktbereich als ein äußerer Kontaktbereich ausgebildet ist. Ein Aufteilen des Kraftflusses vom Bereich des Übergangs des Hauptkörpers des Tragelementes in den Koppelbereich des Tragelementes in zwei unterschiedliche, vorzugsweise entgegengesetzte Richtungen, ist dann die Folge. Der Gesamtkraftfluss wird nun möglichst gleichmäßig verteilt, was einen Bruch des Tragelementes vermeidet und ein besseres Halten des Tragelementes an dem balligen Anschlussbereich des Verstellelementes hervorruft.

Dadurch, dass der erste Kontaktbereich im Inneren des vom Tragelement und dem Reflexionselement definierten Raumes liegt, ist dieser Kontaktbereich auch vor Schmutz und Verunreinigung geschützt, was einen langfristigen guten sowie reibungsarmen Gebrauch ermöglicht und die Verstellbarkeit auch bei schwierigen Rahmenbedingungen sicherstellt.

Wenn der erste Kontaktbereich und der zweite Kontaktbereich jeweils kugelabschnittsartige Innenkontursegmente besitzen, so ist ein Anpassen eines oder beider Kontaktbereiche auf den balligen Anschlussbereich zum Sicherstellen einer guten Verstellbarkeit besonders effizient möglich.

Eine vorteilhafte Ausführungsform ist auch dadurch gekennzeichnet, dass die Innenseite des Koppelbereichs (des Tragelementes) die Außenseite des Anschlussbereiches (des Verstellelementes), so aufeinander abgestimmt sind, dass durch beide Bauteile ein Drehpunkt definiert ist, um den das Tragelement relativ zum Verstellelement verschwenkbar ist. Im Einsatz des Rücksichtsystems kann dann vom Nutzer eine bedarfsgerechte Winkelposition der beiden Bauteile zueinander leicht eingestellt werden.

Es ist von Vorteil, wenn der Anschlussbereich kugelabschnittsartige Gegenkontaktbereiche besitzt. Das Verschwenken / Schwenken wird dadurch erleichtert.

Dabei ist es ferner vorteilhaft, wenn die Gegenkontaktbereiche an die mit ihnen in Kontakt stehende Kontaktbereiche, insbesondere bezüglich ihrer Kontur, angepasst sind. Dadurch lassen sich bspw. auch von einer sphärischen Geometrie abweichende Teilbereiche integrieren oder auch ellipsoide Teilbereiche einsetzen.

Wenn die Gegenkontaktbereiche über Abplattungsbereiche bzw. einen Abplattungsbereich verbunden sind, so wird eine Montageerleichterung einerseits und eine Federelemententlastung andererseits sowie eine Vermeidung von Überbestimmung(en) an den Auflageflächen erreicht.

Für die Serienfertigung hat es sich als vorteilhaft herausgestellt, wenn das Tragelement als Rückwand und/oder das Verstellelement als (Dreh-)Zapfen, vorzugsweise aus Kunststoff etwa Polyamid, bspw. als integrales / einstückiges, einmaterialiges Bauteil ausgebildet ist.

Es ist zweckmäßig, wenn das Verstellelement am Tragelement befestigt ist, bspw. über einen Form- und/oder Kraftschluss.

Ein besonders guter Sitz der beiden Bauteile aneinander wird gewährleistet, wenn das Verstellelement eine Aufnahme zum Anschluss eines fahrzeugfesten Halters / Teleskopstangenhalters, Stabes oder (Teleskop-)Rohres besitzt oder entsprechend selbst ausgebildet ist.

Darüber hinaus hat es sich bewährt, wenn die Aufnahme als Sackloch ausgebildet ist, dessen Boden zur Verdrehverunmöglichung stufig ausgeformt ist.

Die Anbringungsmöglichkeiten lassen sich vielseitig gestalten, wenn das Verstellelement einen indirekten oder direkten Anbindebereich zum Fahrzeug besitzt, der bspw. das Sackloch aufweist.

Das Gewicht lässt sich optimieren, wenn die beiden Kontaktbereiche gemeinsam eine kugelabschnittsartige Schale ausbilden, die im Bereich des Übergangs in den Hauptkörper münden.

Der Kompaktheit des Systems ist es zuträglich, wenn der Hauptkörper im Bereich des Übergangs in einen Winkel α von 15° bis 125° +/- 5° auf die Schale trifft, vorzugsweise 90° +/- 2,5°, wobei der Winkel α zwischen einerseits einer gedachten Gerade durch den Bereich des Übergangs vom Hauptkörper in den Koppelbereich und andererseits einer in Axialrichtung verlaufenden, gedachten Gerade durch den (Kugel-)Mittelpunkt des Anschlussbereichs und/oder den Drehpunkt aufgespannt ist.

Wenn der Hauptkörper in Richtung des Drehpunktes eine gedachte Peillinie vorgibt, die eine theoretische Kugel um den Drehpunkt mit einem Durchmesser von 50 mm, 60 mm oder 70 mm schneidet, so ist der Kraftverlauf in Richtung des Zentrums des Anschlussbereichs besonders gut.

Es hat sich auch bewährt, wenn am Tragelement ein Glaselement angebunden ist, etwa mittels eines Form- und/oder Kraftschlusses, insbesondere bspw. mittels einer Clips-Lösung und das Glaselement als Spiegelglas ausgebildet ist.

Eine vorteilhafte Ausführungsform ist auch dadurch gekennzeichnet, dass an (wenigstens / nur) einem der beiden Kontaktbereiche, vorzugsweise dem ersten Kontaktbereich, oder beiden Kontaktbereichen im montierten Zustand eine Federkraft anliegt, die den Koppelbereich zumindest in jeder den Kontaktbereich in Richtung des Koppelbereichs inneren, vorzugsweise in Richtung des Drehpunktes, drängt. Ein Selbstfixieren nach einer Verstellung wird dadurch erleichtert und eine Variabilität zum Erreichen einer guten Wiedergabe des rückwärtigen Sichtbereiches des Fahrers ist die Folge.

Es ist zweckmäßig, wenn die Federkraft durch ein Federelement, wie einen Ring oder eine Klammer gestellt ist. Das Federelement kann eine oder mehrere Windungen besitzen.

Durch ein solch separates Federelement kann die Federkraft gezielt eingestellt werden. Auch hat es sich bewährt, wenn der Ring einen geschlossenen oder offenen, bspw. geschlitzten, Querschnitt besitzt. Die Montage wird dadurch insbesondere im zweiten Fall verbessert und die Dauerfestigkeit / Dauerbelastbarkeit insbesondere im ersten Fall.

Um auch eine lange Lebensdauer mit unveränderten technischen Rahmenbedingungen sicherzustellen, ist es von Vorteil, wenn das Federelement aus einem metallischen Baustoff, etwa aufweisend eine Eisenlegierung, bspw. nach Art von Federstahl, hergestellt / geschaffen ist.

Um einen einfachen modularen Aufbau zu gewährleisten, ist es von Vorteil, wenn das Federelement als Druckfeder ausgebildet ist, die an der Außenseite des ersten Kontaktbereiches oder des zweiten Kontaktbereiches anliegt. Ein nachträgliches Aufbringen wird dadurch auch erleichtert.

Für die Verbindung der Einzelbauteile zueinander, insbesondere um ein Verlieren der Bauteile zu verunmöglichen, ist es von Vorteil, wenn auf der Außenseite des (jeweiligen) Kontaktbereiches eine Vertiefung, etwa nach Art einer Mulde, Rille oder Rinne, ausgebildet ist, in der das Federelement im montierten Zustand ruht / sitzt / angeordnet ist.

Um einen Gleitbereich zwischen dem Tragelement und dem Verstellelement dauerhaft sauber / frei von Verunreinigung zu halten, ist es von Vorteil, wenn zwischen einem der Kontaktbereiche und dem ihm zugeordneten Gegenkontaktbereich, vorzugsweise dem ersten Kontaktbereich und dem ihm zugeordneten Gegenkontaktbereich, mittels dem Tragelement und/oder dem Verstellelement eine Dichtfunktion realisiert ist, bspw. über eine angeformte Dichtlippe an einem oder beiden Bauteile, und/oder ein zusätzliches Dichtelement zwischen dem Tragelement und dem Verstellelement eingebaut / zwischengeschalten ist.

Für die Montage ist es von Vorteil, wenn der Koppelbereich ganz oder wenigstens abschnittsweise / teilweise elastisch ausgebildet ist.

Auch ist es von Vorteil, wenn (vorrangig) nur im ersten Kontaktbereich und/oder (nachrangig) nur im zweiten Kontaktbereich Elastizität hervorrufende Geometrieveränderungen, wie Verdünnungen, Schlitze, Freistellungen, Nute, Wellformen und/oder ähnliche Gestaltungen vorhanden sind.

Um unterschiedliche Betriebspositionen vorgeben zu können, ist es von Vorteil, wenn der Koppelbereich und der Anschlussbereich zum Ausbilden einer Indexgeometrie ausgebildet sind, mittels der bestimmte vordefinierte Relativpositionen zwischen dem Tragelement und dem Verstellelement einnehmbar sind.

Dabei ist es von Vorteil, wenn die Indexgeometrie nach Art eines Nut-und-Feder-Ineinandergreifens ausgeformt ist.

Bewährt hat es sich dabei, wenn der Koppelbereich auf seiner Innenseite wenigstens eine Nut / Rinne / Rille oder eine Vielzahl derer besitzt und wobei in wenigstens eine oder mehrere derer (je) als Vorsprung auf der Außenseite des Verstellelementes eingreift oder als Alternative / Ergänzung das Verstellelement auf seiner Außenseite wenigstens eine Nut / Rinne / Rille oder eine Vielzahl derer besitzt und wobei in wenigstens eine Nut / Rinne / Rille oder mehrere (je) ein Vorsprung auf der Innenseite des Koppelbereiches des Tragelementes eingreift.

Wenn die Nut / Rinne / Rille und/oder der Vorsprung im Querschnitt eine V-, U-, dachförmige oder polygonförmige Kontur besitzt und/oder beide (nahezu) spielfrei zusammenpassend ausgeformt sind, so ist ein wackelfreies Anpassen des Verstellelementes an das Tragelement und vice versa möglich.

Um die Verstellung auch stufenlos gestalten zu können, ist es von Vorteil, wenn der Vorsprung in der Nut / Rinne / Rille (kontinuierlich / diskontinuierlich) verschieblich / gleitbar eingebaut / eingesetzt ist.

Darüber hinaus hat es sich auch bewährt, wenn auf gegenüberliegenden Außenseiten des Verstellelementes vom Drehpunkt aus gesehen Nuten / Rinnen / Rillen vorhanden sind, von denen zwei mit je einem Vorsprung des Verstellelementes zumindest in einem Abschnitt ausgefüllt sind und wenigstens zwei oder ein ganzzahliges Vielfaches an Nuten / Rillen / Rinnen vorsprungsfrei bleiben.

Wenn die Nuten / Rinnen / Rillen gleichmäßig über den Innenumfang des Koppelbereiches verteilt sind, z. B. alle 90°, 45°, 22,5°, 12,25° oder 6,125°, so lassen sich bedarfsgerechte Verstellungen vorhalten.

Die Erfindung betrifft letztlich eine solche Ausgestaltung, bei der ein Spiegelkopf ausgebildet ist und/oder ein Kopfversteller oder ein Glasversteller umfasst ist.

Wenn der innere Kontaktbereich und/oder der äußere Kontaktbereich radial geschlossen ist und vorzugsweise elastische Teilbereiche besitzt, so wird bei Ausschluss von Verschmutzungsmöglichkeiten bzw. einem Vorhalten von einem Schmutzschutz eine einfache Montage ermöglicht.

Die Erfindung betrifft letztlich auch ein Montageverfahren zum Koppeln eines Tragelementes des indirekten Rücksichtsystems der erfindungsgemäßen Art an dem Verstellelement, wobei das Tragelement aus Richtung des Reflexionselementes in Richtung des Verstellelementes beispielsweise über einen dort ausgebildeten Gegenkontaktbereich bewegt wird / erfolgt. Ein Aufschnappen ist die Folge.

Eine Weiterbildung wird darin gesehen, dass der Koppelbereich ausbildend den zweiten Kontaktbereich und/oder den ersten Kontaktbereich beim Aufschieben auf das Verstellelement erst aufgeweitet wird und danach elastisch rückfedert.

Dabei ist es von Vorteil, wenn der Koppelbereich auf eine sphärische Verdickung / auf den balligen Anschlussbereich des Verstellelementes aufgeclipst wird.

Mit anderen Worten betrifft die Erfindung ein indirektes Sichtsystem für ein Fahrzeug, wobei der Winkel α zwischen einer horizontalen Kugelmittelachse und einem Schenkel des Kugelmittelpunkts zum Auftreffpunkt der Rückwand auf den Kontaktbereich von minimal 15° bis maximal 125° beträgt.

Eine Weiterbildung kann auch dadurch in Worte gefasst werden, dass das Verstellelement mit dem Anbindebereich zum Fahrzeug und in Wirkflächen zum Tragelement einstückig ausgebildet ist.

Darüber hinaus kann die Richtung der Rückwand im Bereich des Kontaktbereiches derart gestaltet sein, dass diese in einer theoretischen Verlängerung zum Kugelmittelpunkt hin eine theoretische Kugel von einem Durchmesser von 60 mm durchschneidet.

Als vorteilhaft wird auch gesehen, dass die Montage des Verstellelementes zum Tragelement aus Richtung des Reflexionselementes von innen nach außen erfolgt und der äußere Kontaktbereich und der innere Kontaktbereich radial geschlossen sind oder der äußere Kontaktbereich radial geschlossen ist und der innere Kontaktbereich elastische Teilbereiche aufweist. Hier bieten sich Schlitze, Freistellungen, Nuten und Wellformen an. Eine Segmentierung bzw. ein Umsetzen eines Druckknopfprinzips lässt sich dadurch einfacher bewerkstelligen. Die Schlitze bewirken dabei eine elastische Federwirkung des Kontaktbereiches.

Mit anderen Worten betrifft die Erfindung auch eine Montage des Verstellelementes zum Tragelement aus Richtung des Reflexionselementes von innen nach außen, wobei der äußere und innere Kontaktbereich des Tragelementes radial geschlossen ist und das Verstellelement elastische Teilbereiche aufweist.

Wenn an den äußeren oder inneren Kontaktbereichen des Tragelementes mittels eines Federelementes ein Druck auf die Kontaktbereiche des Verstellelementes aufgebracht wird, so wird mittels der Feder die Reibung erhöht, damit es eine höhere Verstellkraft für die Verstellung erzwingt.

Es ist von Vorteil, wenn an den äußeren oder inneren Kontaktbereichen des Verstellelementes mittels eines Federelements ein Druck auf die Kontaktbereiche des Tragelementes aufgebracht wird.

Dabei ist es von Vorteil, wenn das Federelement eine Metallfederklammer oder eine offene oder geschlossene Metallringfeder mit einer oder mehreren Windungen ist.

Auch ist es von Vorteil, wenn im äußeren Kontaktbereich des Tragelementes und dem äußeren Kontaktbereich des Verstellelementes eine Dichtfunktion integriert ist. Es sind angeformte Dichtlippen am Tragelement genauso denkbar, wie zusätzliche Dichtlippen mit einem zweiten Werkstoff, die angeformt sind. Auch sind zusätzliche Dichtelemente, welche montiert werden, denkbar.

Wenn das indirekte Sichtsystem mittels eines Rohres oder das Verstellelement am Fahrzeug direkt oder indirekt montiert ist und das Verstellelement einstückig oder mehrteilig ausgeführt ist, um das Rohr zu befestigen, so lassen sich weitere Alternativen realisieren. Dabei kann bei der direkten Montage ein Rohr am Fahrzeug montiert werden oder bei der indirekten Montage ein zusätzliches Halteelement, wie etwa ein Teleskopstangenhalter verwendet werden.

Es ist von Vorteil, wenn das Rohr im Verstellelement über Formschluss, also entsprechende geometrische Formen, eindeutig definiert, positioniert und fixiert ist. Dies hat den Vorteil, dass durch die eindeutige Positionierung des indirekten Sichtsystems ein gefordertes Sichtfeld, z. B. um Kundenanforderungen zu erfüllen oder gesetzliche Sichtfelder - wie bswp. die Normen UN/ECE-R46 oder ISO 5721-2 oder ISO 5006 fordern - immer eingehalten werden. Zudem ist der Spiegelkopf mit dem Verstellelement verliersicher angebracht und kann nicht "abfallen", falls der Kraftschluss verloren geht oder sich verringert.

Es ist auch von Vorteil, wenn das indirekte Sichtsystem über das Verstellelement am Fahrzeug direkt, bspw. über ein Verstellelement, was am Fahrzeug montiert ist, angebracht ist und das Verstellelement einstückig oder mehrteilig ausgeführt ist.

Auch ist es von Vorteil, wenn über eine Indexgeometrie zwischen dem Verstellelement und dem Tragelement, z. B. nach Art von Nut und Feder, radial um die horizontale Kugelmittelachse verschiedene Betriebspositionen zwischen dem Verstellelement und dem Tragelement einstellbar sind. Die Betriebspositionen können nach der Montage des Spiegelkopfes noch gewählt werden, da die Indexgeometrie elastisch ausgeführt ist. Hierdurch ist es auch möglich einen Kollisionsschutz durch Dämpfung und Nachgiebigkeit der Indexgeometrie zu erlangen.

Wie erläutert, ist es von Vorteil, wenn das indirekte Sichtsystem ein Spiegelkopf ist und/oder das indirekte Sichtsystem ein Kopfversteller oder Glasversteller ist.

Es zeigen sich bei der erfindungsgemäßen Lösung zahlreiche Vorteile. So stellt sich ein optimierter Kraftfluss vom Tragelement in das Verstellelement ein, da die Krafteinleitung zwischen dem inneren und äußeren Kontaktbereich stattfindet und so die Kraft besser aus dem Tragelement in das Verstellelement übertragen wird. Auch reduziert sich die Anzahl der Bauteile, da die Funktion und die geometrische Gestalt integriert sind. Die Kontaktbereiche des Tragelementes und des Verstellelements umschlingen sich und es ist kein zusätzliches Gleitelement oder Fügeelement erforderlich. Es stellt sich eine vereinfachte Montage ein, da weniger Bauteile benötigt werden. Hierdurch werden auch die Kosten reduziert. Der Verstellmechanismus muss in einer Ausführungsform nur noch "verschnappt" werden, und es ist kein Fügeelement wie eine Schraube oder ein Riegelbolzen mehr erforderlich.

Durch die Indexgeometrie nach Art einer Nut-und-Feder-Kombination, wird bei Aufbringen eines größeren Drehmoments eine Verstellung ermöglicht, etwa um von einer hochformatigen auf eine querformatige Anbringung zu wechseln.

Ein weiterer positiver Aspekt bezieht sich auf die Führung eines Elektrobabels, mit dem ein Anschluss elektrischer Module, wie Heizfolien bspw. auf der Spiegelrückseite (d.h. im Inneren des durch das Glaselement und das Tragelement begrenzten Raumes), Blindspot- und/oder Parkdistanz-Systeme, realisiert werden kann. Solche Elektrokabel / Versorgungsleitungen lassen sich dann durch das Innere des balligen Anschlussbereichs des Verstellelements bzw. der vom Verstellelement ausgebildeten Kugel führen.

Durch die Lösung ist es gleichzeitig möglich, auch im Falle einer Kollision einen Schutz der Bauteile zu realisieren, da eine Verdrehung über das Drehmoment zum Stabilhalten des Tragelements ermöglicht ist. Auch nach der Montage des Spiegelkopfes ist eine Herstellung von Varianten möglich, z. B. bei einem horizontalen oder gewünschten vertikalen Abgang einer Tragstruktur zum Fahrzeug hin. Hierdurch entsteht ein Kostenvorteil.

Geometrische Spiegelköpfe können sowohl auf der linken als auch auf der rechten Seite eines Fahrzeugs verwendet werden, da sich die Anbindung um 180° über zwei Betriebsstellungen verdrehen lässt. Dadurch werden Varianten reduziert, was einen geringeren Aufwand in Produktion, Logistik und Lagerhaltung sowohl beim Hersteller als auch im Verkauf (insbesondere dem Handel und den Fahrzeugherstellern) bringt.

Die Erfindung wird nachfolgend mit Hilfe mehrerer Ausführungsformen mittels einer Zeichnung näher erläutert. Es zeigen:
- Fig. 1: eine isometrische Ansicht auf ein indirektes Rücksichtsystem gemäß einer ersten Ausführungsform der Erfindung für ein Kfz, nämlich einen Lkw, einen Bus bzw. einen Transporter,
- Fig. 2: einen Längsschnitt entlang der Linie II aus Fig. 1 durch das Rücksichtsystem der ersten Ausführungsform,
- Fig. 3: eine Rückansicht auf das Rücksichtsystem der Fign. 1 und 2,
- Fig. 4: eine Vergrößerung des Bereiches IV aus Fig. 2,
- Fig. 5: eine Ansicht auf den Bereich aus Fig. 4 von hinten, ähnlich der Darstellungsform aus Fig. 3,
- Fig. 6: eine zweite Ausführungsform in einer zur Fig. 5 vergleichbaren Darstellungsweise,
- Fig. 7: eine Anbindung des in beiden Ausführungsformen enthaltenen Verstellelementes an ein im Anschlussbereich vertikal verlaufendes Rohr,
- Fig. 8: eine Anbindung der anderen Ausführungsform an ein im Anbindungsbereich horizontal ausgerichtetes Rohr, und

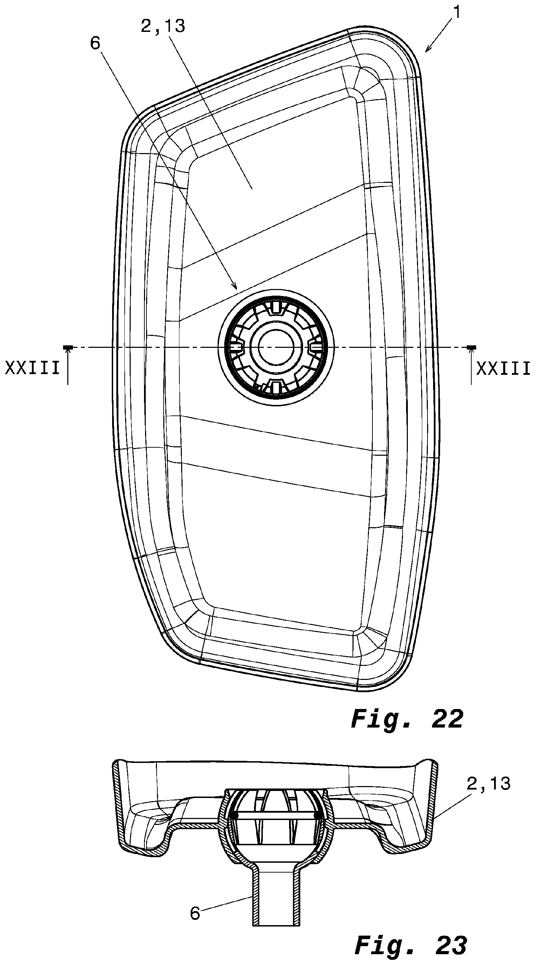

- Fig. 9 bis 23: unterschiedliche Ausführungsformen in unterschiedlichen Ansichten und Schnitten / Detailansichten.

Die Figuren sind lediglich schematischer Natur und dienen nur dem Verständnis der Erfindung. Die gleichen Elemente sind mit denselben Bezugszeichen versehen. Merkmale der einzelnen Ausführungsformen können untereinander ausgetauscht werden.

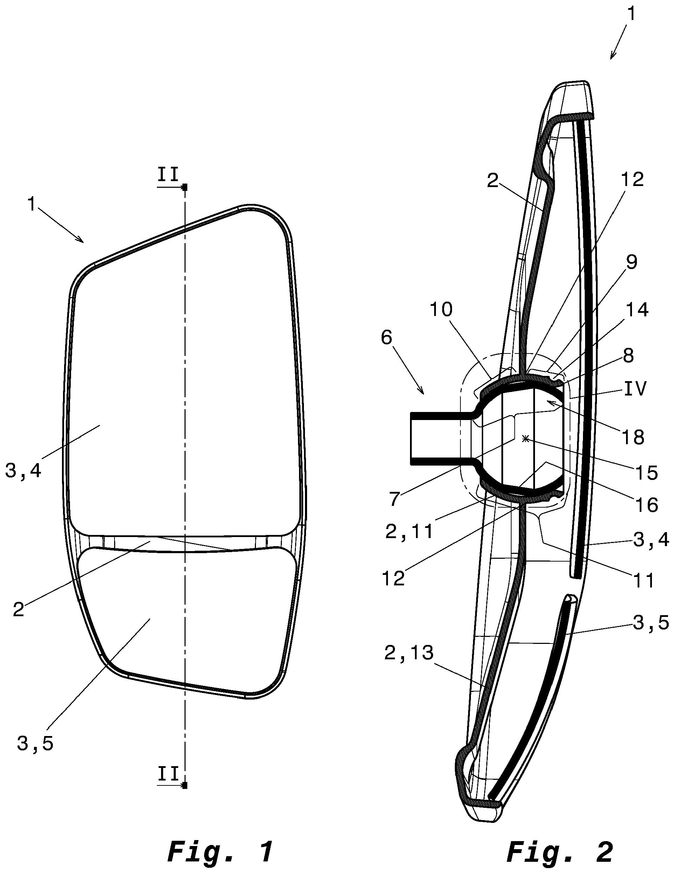

In der Fig. 1 ist ein indirektes Rücksichtsystem mit dem Bezugszeichen 1 versehen. Es besitzt ein Tragelement 2 zum Befestigen wenigstens eines Reflexionselementes 3. Es gibt zwei Reflexionselemente 3, nämlich ein oberes Spiegelglas 4 und ein unteres Spiegelglas 5.

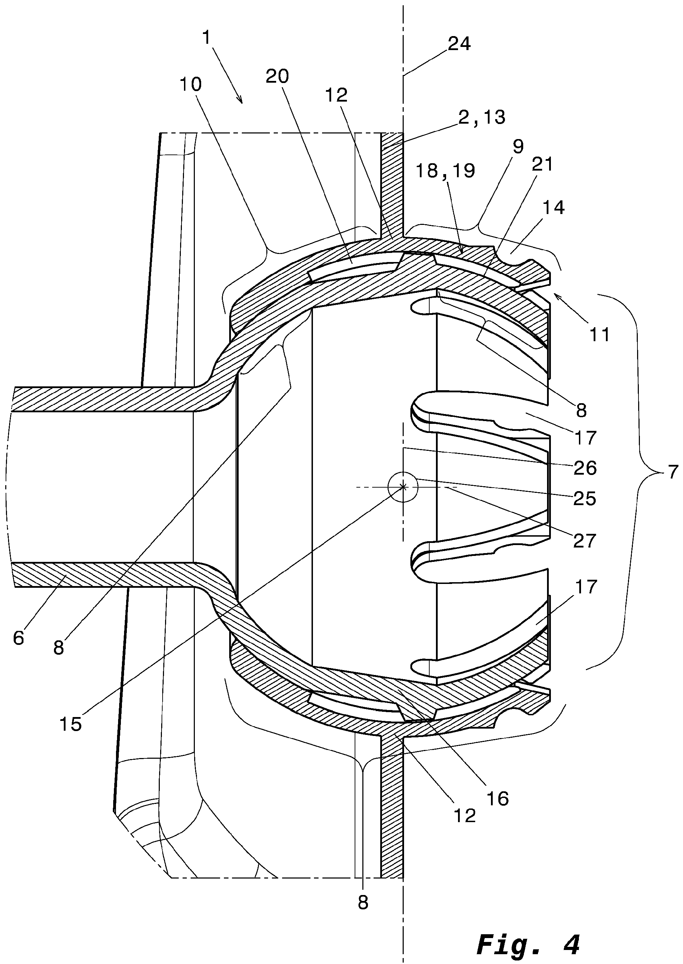

In der Fig. 4 ist die erste Drehachse mit dem Bezugszeichen 25, die zweite Drehachse mit dem Bezugszeichen 26 und die dritte Drehachse mit dem Bezugszeichen 27 versehen.

Schon in der Fig. 2 ist zu erkennen, dass mittig des Tragelementes 2 ein Verstellelement 6 vorhanden ist. Das Verstellelement 6 besitzt einen balligen Anschlussbereich 7. Der ballige Anschlussbereich 7 weist Gegenkontaktbereiche 8 auf, die mit einem ersten Kontaktbereich 9 und einem zweiten Kontaktbereich 10 eines Koppelbereiches 11 korrespondieren. Der Koppelbereich 11 ist mittig / zentral eines Übergangsbereichs 12 des Tragelementes 2 vorhanden. Der Übergangsbereich 12 ist jener Bereich eines Übergangs, an dem ein Hauptkörper 13 in den Koppelbereich 11 übergeht.

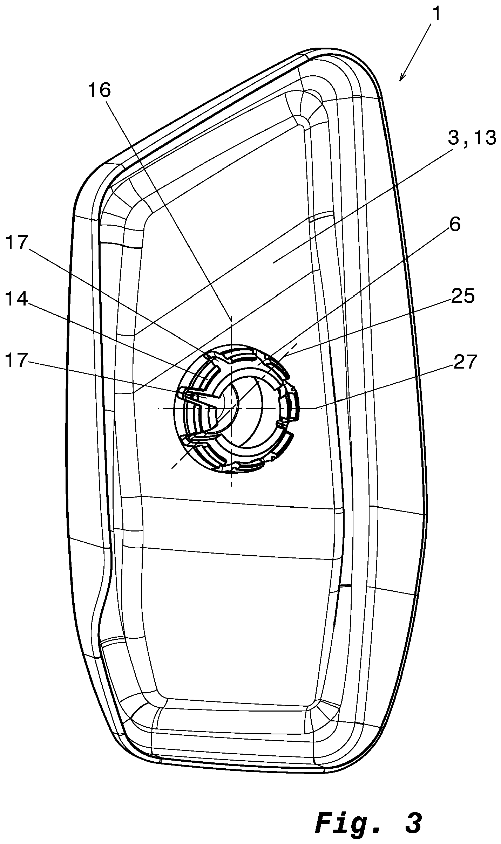

Im ersten Kontaktbereich 9 ist eine Mulde 14 vorhanden, in die ein Federelement eingesetzt werden kann. Es gibt einen Drehpunkt 15, um den das Tragelement 2 drehbar ist. Der Anschlussbereich 7 besitzt wenigstens eine Abplattung 16 zwischen den voneinander axial getrennten Gegenkontaktbereichen 8. Sowohl der Koppelbereich 11, als auch der Anschlussbereich 7 kann elastisch ausgebildet sein, insbesondere Schlitze 17 besitzen, wie sie in der Fig. 3 auch dargestellt sind.

In der Fig. 4 ist die erfindungsgemäße Indexgeometrie 18 größer dargestellt. Die Indexgeometrie 18 stellt Verdrehstopmittel 19. Insbesondere setzt sie sich aus Bauteilen zusammen, die ein Nut- und -Feder-Prinzip realisieren.

Die gedachte Trennfläche ist in der Fig. 4 mit dem Bezugszeichen 24 versehen.

Insbesondere weist bspw. der Koppelbereich 11 eine Rille / Rinne / Riefe 20 auf, die sich nicht vollständig durch das Material des Koppelbereiches 11 erstreckt. Sie erstreckt sich auch nur über ein Teilsegment des Koppelbereiches 11, zumindest aber von einem dem Reflexionselement 3 zugewandten offenen Ende des Verstellelementes 6. Die Indexgeometrie 18 weist auch einen Vorsprung / eine Rippe / eine Erhöhung 21 auf, der sich vom Anschlussbereich 7 radial nach außen in Richtung des Koppelbereiches 11 erstreckt. Der Vorsprung / die Rippe / die Erhöhung 21 greift möglichst spielfrei, im besten Fall sogar vollständig spielfrei, in die Rille / Rinne / Riefe ein.

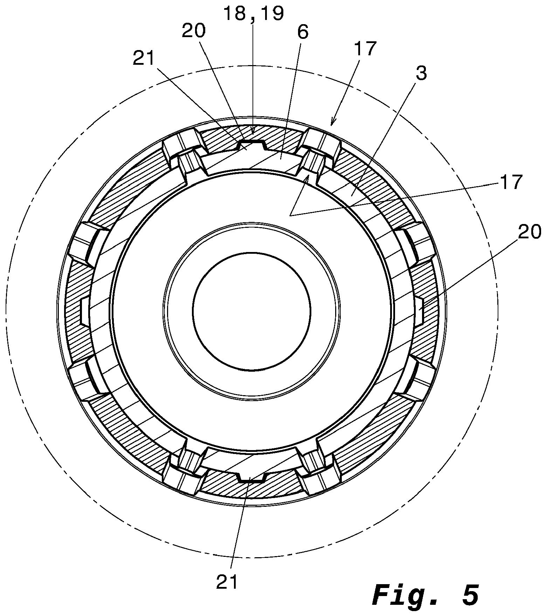

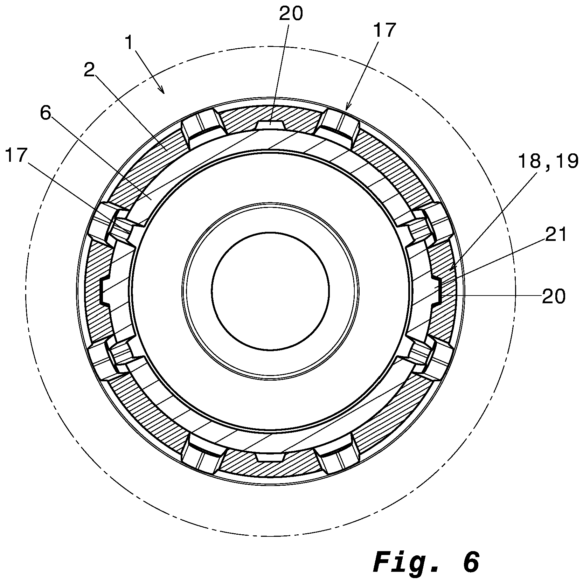

Wie auch in den Fig. 5 und 6 gut zu erkennen ist, in der zwei Ausführungsformen bzw. zwei unterschiedliche Positionen / Grundpositionen einer einzigen Ausführungsform dargestellt sind, weist die Rille / Rinne / Riefe 20 einen polygonförmigen / einen trapezförmigen / parallelogrammartigen Querschnitt auf. Der Vorsprung / die Rippe / die Erhöhung 21 selber hat eine kegelstumpfartige Außenkontur mit einem Öffnungswinkel von ca. 45°, 30°, 20°, 15° ±2,5°.

In der Figur 5 ist das Tragelement 2 relativ zum Verstellelement 6 in einer ersten Grundposition und in der Figur 6 in einer zweiten Grundposition dargestellt. Sowohl in der ersten Grundposition, als auch in der zweiten Grundposition liegt der erste Betriebszustand vor. Eine Verdrehung nur um zwei zueinander orthogonal ausgerichtete Achsen, nämlich die Vertikalachse und eine erste Horizontalachse, bleibt dabei möglich.

Wird ein Überdrehmoment aufgebracht, springt der Vorsprung 21 aus der Rille 20, weil eine Lasche des Verstellelementes 6 nach innen federt und/oder eine Lasche des Tragelementes 2 nach außen federt. Nun liegt der zweite Betriebszustand vor.

Während dieses zweiten Betriebszustandes wird das Tragelement 2 relativ zum Verstellelement 6 um eine weitere / zweite Horizontalachse verschwenkt. Dann vollzieht der in Fig. 5 obere Vorsprung 21 eine 90° Drehung und rastet, so wie in Fig. 6 zu sehen, in eine andere Rille 20 wieder ein. Erst dann ist die zweite Grundposition eingenommen und der erste Betriebszustand liegt wieder vor.

Das notwendige Überdrehmoment wird durch die Schrägheit der Außenkontur des Vorsprungs / der Rippe / der Erhöhung 21 und die Rückstelleigenschaften des Tragelemente 3 und/oder des Verstellelements 6 im Bereich der Indexgeometrie 18 voreingestellt.

Die Rückstelleigenschaften sowohl des Tragelementes 2, als auch des Verstellelementes 6, und der Öffnungswinkel des kegelstumpfartigen Vorsprungs 21, sind ergo so aufeinander abgestimmt, dass sie einen linienförmigen Kontakt zwischen dem Tragelement 2 und dem Vorsprung 21 des Verstellelementes 6 sicher stellen; wobei eine solche Wahl gezielt getroffen ist, dass bei Überschreiten des Überdrehmomentes (oberhalb des Grenzdrehmomentes) ein Ausbrechen des Vorsprungs / der Rippe / der Erhöhung 21 aus der Rille / Rinne / Riefe 20 erlaubt ist und eine Verlagerung des Tragelementes 2 um bspw. 30°, 60° oder wie hier dargestellt 90° möglich ist.

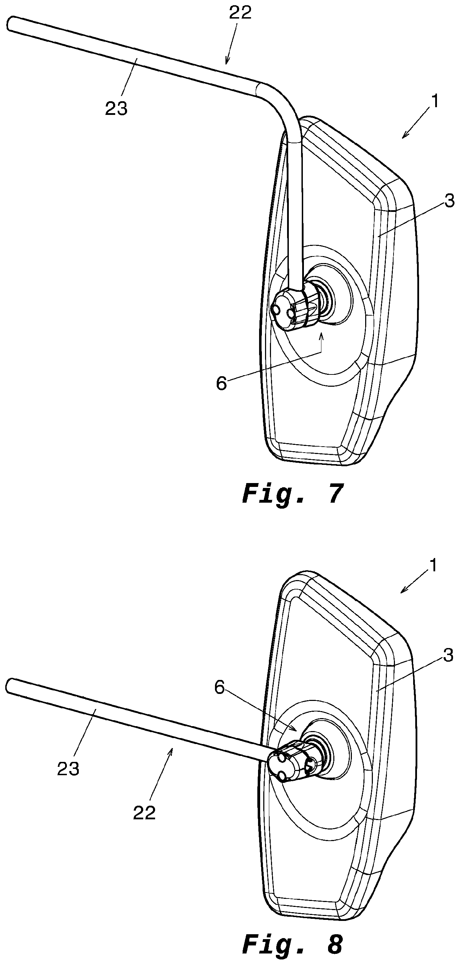

Ein dadurch ermöglichtes Anbindungssystem 22 ist in den Fign. 7 und 8 eingesetzt, um eine Anbindung am Kraftfahrzeug zu realisieren. Das Anbindungssystem 22 besitzt auch ein Rohr 23.

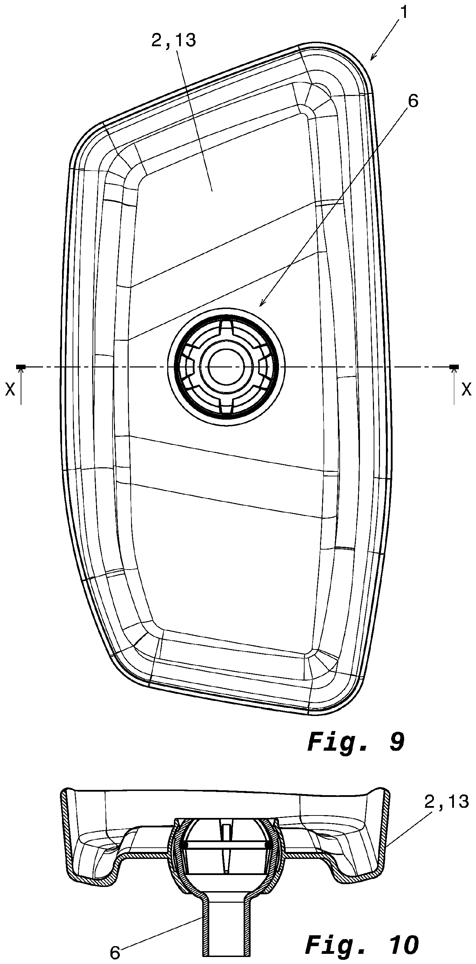

In den Figuren 9 und 10 ist eine weitere Ausführungsform gezeigt, bei der das Tragelement 2 geschlossen mit einer Rille horizontal und vertikal ausgebildet ist. Das Verstellelement 6 ist geschlitzt mit einem Vorsprung ausgebildet und insbesondere selbstfedernd oder mit einem optionalem Federelement versehen. Im Gegensatz zu der Ausführungsform gem. Fig. 4 ist das Federelement innenliegend von oben ins Tragelement 2 gefügt.

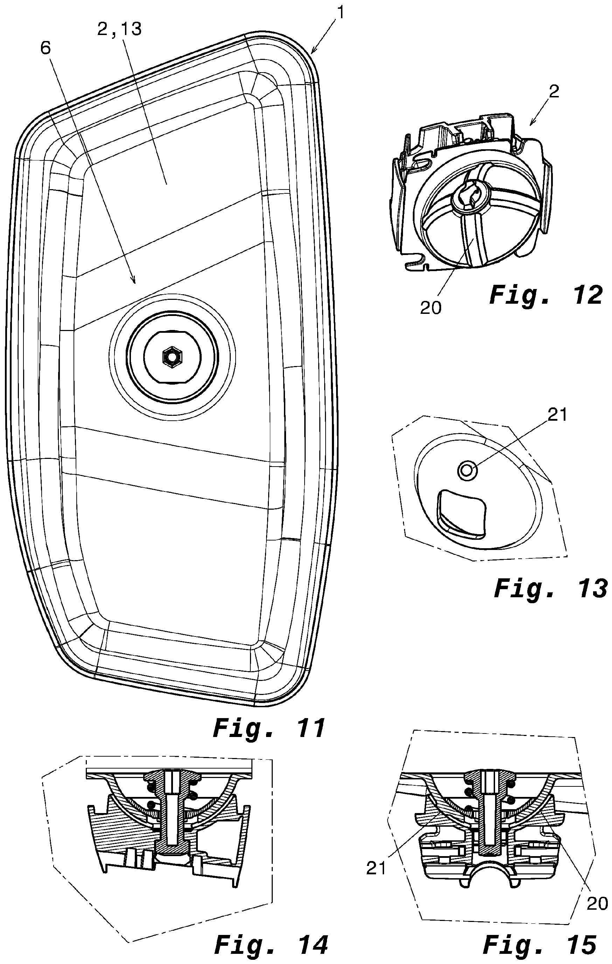

In den Figuren 11 bis 15 ist eine weitere Ausführungsform visualisiert, bei der das Tragelement 2, schalenartig mit einem einseitigen Vorsprung ausgestaltet ist. Dabei ist das schalenartige Verstellelement 6 mit einer horizontalen und vertikalen Rille versehen. Es ist ein Druckstück zur Aufnahme der Federkraft vorhanden. Es gibt ein Verbindungselement zum Vorspannen der Feder und zur Verriegelung aller Bauteile.

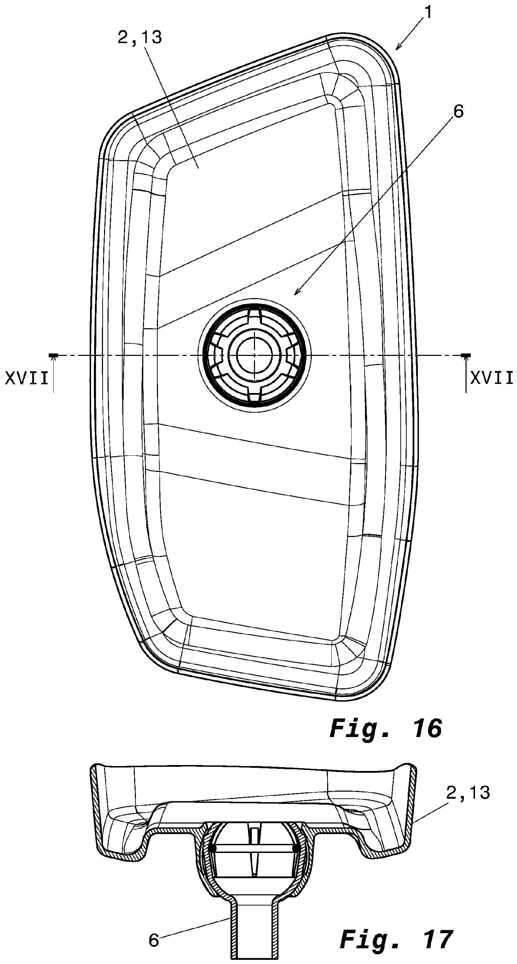

In den Figuren 16 und 17 ist eine weitere Ausführungsform visualisiert, bei der das Tragelement 2 geschlossen ist und mit (je) einer horizontal und vertikal ausgerichteten Rille versehen ist. Das Verstellelement 6 ist geschlitzt, mit einem Vorsprung ausgebildet und insbesondere selbstfedernd oder mit einem optionalem Federelement versehen. Im Gegensatz zu der Ausführungsform der Fig. 4 ist das Federelement innenliegend angeordnet. Im Gegensatz zu der Ausführungsform der Fig. 10 ist ein Gelenkkontaktbereich einseitig versetzt in den Randbereich des Gegenkontaktbereiches 8 von oben ins Tragelement 2 gefügt.

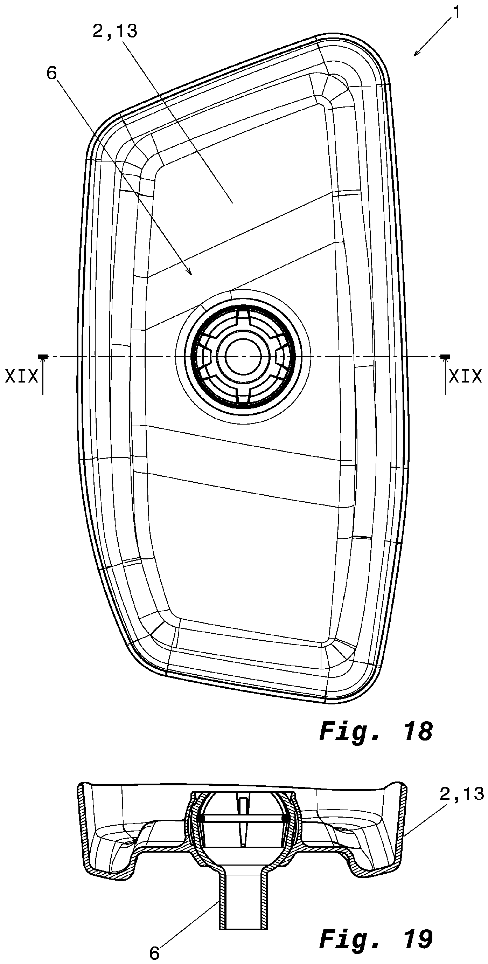

In den Figuren 18 und 19 ist eine weitere Ausführungsform visualisiert, bei der das Tragelement 2 geschlossen ist, nämlich mit einer Rille (horizontal und vertikal). Dabei ist das Verstellelement 6 geschlitzt mit einem Vorsprung, ergo selbstfedernd oder mit optionalem Federelement gestaltet. Im Gegensatz zum Gegenstand der Fig. 4 ist das Federelement innenliegend angeordnet. Im Gegensatz zum Gegenstand der Fig. 10 ist der Gelenkkontaktbereich einseitig versetzt in den Randbereich des Gegenkontaktbereiches 8 von oben ins Tragelement 2 gefügt.

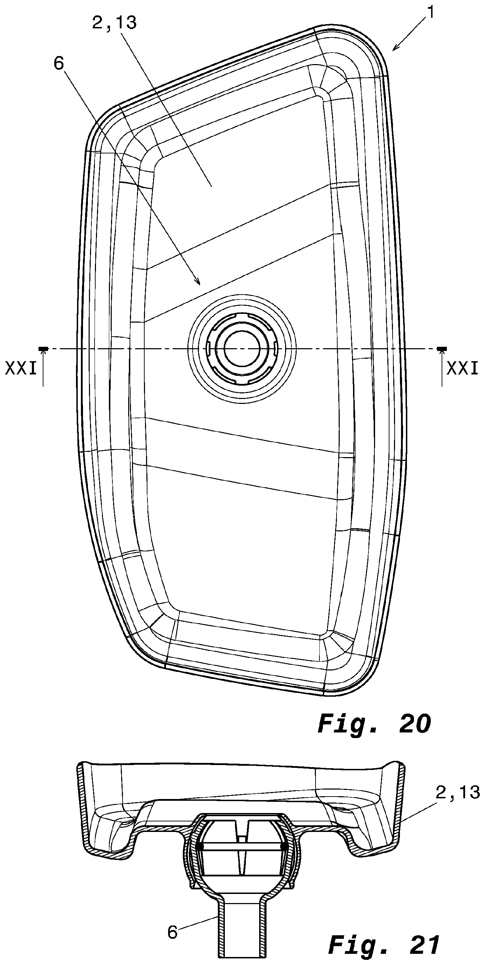

In den Figuren 20 und 21 ist eine weitere Ausführungsform visualisiert, bei der das Tragelement 2 geschlossen ist, nämlich mit einer Rille (horizontal und vertikal). Dabei ist das Verstellelement 6 geschlitzt mit einem Vorsprung, ergo selbstfedernd oder mit optionalem Federelement, gestaltet. Im Gegensatz zum Gegenstand der Fig. 4 ist das Federelement innenliegend angeordnet. Im Gegensatz zum Gegenstand der Fig. 10 ist der Gelenkkontaktbereich einseitig versetzt in den Randbereich des Gegenkontaktbereiches 8 von unten ins Tragelement 2 gefügt.

In den Figuren 20 und 21 ist eine weitere Ausführungsform visualisiert, bei der das Tragelement 2 geschlossen ist, mit einem Vorsprung. Das Verstellelement 6 ist geschlitzt mit einer Rille (horizontal und vertikal), selbstfedernd oder mit optionalem Federelement versehen. Im Gegensatz zu der Ausführungsform der Fig. 4 ist das Federelement innenliegend von oben ins Tragelement gefügt. Es liegt also eine umgekehrte Anordnung von "Vorsprung und Rille" im Gegensatz zu allen anderen Ausführungsformen der Figuren 9 bis 21 vor.

### Bezugszeichenliste

- 1: indirektes Rücksichtsystem
- 2: Tragelement
- 3: Reflexionselement
- 4: oberes Spiegelglas
- 5.: unteres Spiegelglas
- 6: Verstellelement
- 7: balliger Anschlussbereich
- 8: Gegenkontaktbereich
- 9: erster Kontaktbereich
- 10: zweiter Kontaktbereich
- 11: Koppelbereich
- 12: Übergangsbereich
- 13: Hauptkörper
- 14: Mulde
- 15: Drehpunkt
- 16: Abplattung
- 17: Schlitz
- 18: Indexgeometrie
- 19: Verdrehstopmittel
- 20: Rille
- 21: Vorsprung / Rippe / Erhöhung
- 22: Anbindungssystem
- 23: Rohr
- 24: gedachte Trennfläche
- 25: erste Drehachse
- 26: zweite Drehachse
- 27: dritte Drehachse

## Patentansprüche

1. Indirektes Rücksichtsystem (1) für ein Kraftfahrzeug, mit einem Tragelement (2) zum Befestigen wenigstens eines Reflexionselementes (3), wobei das Tragelement (2) einen Koppelbereich (11) zum lageveränderbaren Befestigen / Anbringen an einem seinerseits fahrzeuganbindbaren Verstellelement (6) besitzt, wobei der Koppelbereich (11) einen Gegenkontaktbereich (8) des Verstellelementes (6) kontaktiert, wobei am Tragelement (2) und am Verstellelement (6) ineinandergreifende Verdrehstopmittel (19) vorhanden sind, **dadurch gekennzeichnet, dass** die Verdrehstopmittel (19) eine Indexgeometrie (18) ausbilden, die in einem ersten Betriebszustand eine Verstellung des Tragelementes (3) relativ zum Verstellelement (6) um zwei quer zueinander stehende Drehachsen (25, 26) zulässt und in wenigstens einem zweiten Betriebszustand eine Grundpositionsänderung des Tragelementes (2) relativ zum Verstellelement (6) um eine dritte Drehachse (27) zulässt, die quer zu den beiden anderen Drehachsen (25, 26) ausgerichtet ist.

2. Indirektes Rücksichtsystem (1) nach Anspruch 1, **dadurch gekennzeichnet, dass** das Tragelement (2) und das Verstellelement (6) von ihrer Geometrie, Materialstärke und Materialbeschaffenheit so aufeinander abgestimmt sind, dass bei Vorliegen eines Überdrehmoments, das größer als ein vorbestimmtes Grenzdrehmoment ist, der Übergang vom ersten Betriebszustand in den zweiten Betriebszustand freigegeben / erzwungen wird.

3. Indirektes Rücksichtsystem (1) nach Anspruch 2, **dadurch gekennzeichnet, dass** das Verstellelement (6) einen balligen Anschlussbereich (7) besitzt, der den Gegenkontaktbereich (8) ausbildet.

4. Indirektes Rücksichtsystem (1) nach Anspruch 3, **dadurch gekennzeichnet, dass** das Tragelement (2) und das Verstellelement (6) gezielt so gestaltet sind, dass die Rückstelleigenschaften und das E-Modul der beiden Bauteile so auf die Kontur ineinandergreifender Indexgeometriebauteile abgestimmt sind, dass bei Vorliegen des Überdrehmoments, der wenigstens zweite Betriebszustand zwangseingenommen wird.

5. Indirektes Rücksichtsystem (1) nach Anspruch 4, **dadurch gekennzeichnet, dass** ein erstes Indexgeometriebauteil als eine Rille / Rinne / Riefe (20) ausgestaltet ist und ein zweites Indexgeometriebauteil als ein Vorsprung / Rippe / Erhöhung (21) ausgestaltet ist.

6. Indirektes Rücksichtsystem (1) nach Anspruch 5, **dadurch gekennzeichnet, dass** die Rille / Rinne / Riefe (20) am Tragelement (2) vorhanden ist und der Vorsprung (21) am Verstellelement (6) vorhanden ist oder umgekehrt.

7. Indirektes Rücksichtsystem (1) nach Anspruch 6, **dadurch gekennzeichnet, dass** das Grenzdrehmoment wenigstens 10 % größer ist, als das im ersten Betriebszustand auftretende Drehmoment, das zum Stabilhalten des Tragelementes (3) relativ zum Verstellelement (6) benötigt ist.

8. Indirektes Rücksichtsystem (1) nach Anspruch 7, **dadurch gekennzeichnet, dass** der Vorsprung / die Rippe / die Erhöhung (21) spielfrei in die Rille / Rinne / Riefe (20) eingreift.

9. Indirektes Rücksichtsystem (1) nach Anspruch 8, **dadurch gekennzeichnet, dass** der Vorsprung (21) in einem Querschnitt orthogonal zu der Längsachse der Rille / Rinne / Riefe (20) eine angeschrägte Seite besitzt, die zum Eingehen eines Linienkontakts mit dem die Rille / Rinne / Riefe (20) ausbildenden Material konturiert ist.

10. Indirektes Rücksichtsystem (1) nach Anspruch 9, **dadurch gekennzeichnet, dass** der Vorsprung (21) wenigsten im Wirkbereich eine Kegelkontur oder Kegelstumpfkontur oder kugelabschnittsartige Kontur oder sphärische / ellipsoide Kontur besitzt.

11. Indirektes Rücksichtsystem (1) nach Anspruch 10, **dadurch gekennzeichnet, dass** die Indexgeometrie (18) aus zwei Bauteilen zusammengesetzt ist, von denen wenigstens eines elastisch ausgebildet ist.

## Claims

1. An indirect rear viewing system (1) for a motor vehicle comprising a supporting element (2) for fastening at least one reflective element (3), wherein the carrying element (2) has a coupling region (11) for a position-variable fastening / attachment to an adjusting element (6) which in turn can be attached to the vehicle, wherein the coupling region (11) contacts a counter contact region (8) of the adjusting element (6), interlocking anti-rotation means (19) being present on the supporting element (2) and on the adjusting element (6), **characterized in that** the anti-rotation means (19) form an index geometry (18), which in a first operating state permits an adjustment of the supporting element (3) relative to the adjusting element (6) about two axes of rotation (25, 26), which are transverse to one another, and in at least a second operating state permits a basic position change of the supporting element (2) relative to the adjusting element (6) about a third axis of rotation (27), which is aligned transversely to the other two axes of rotation (25, 26).

2. The indirect rear viewing system (1) according to claim 1, **characterized in that** the supporting element (2) and the adjusting element (6), with respect to their geometry, material thickness and material properties, are matched to each other in such a way that, if an overtorque occurs which is greater than a predetermined limit torque, the transition from the first operating state to the second operating state is enabled / enforced.

3. The indirect rear viewing system (1) according to claim 2, **characterized in that** the adjusting element (6) has a spherical connection area (7) which forms the counter-contact region (8).

4. The indirect rear viewing system (1) according to claim 3, **characterized in that** the supporting element (2) and the adjusting element (6) are specifically designed in such a way that the restoring properties and the modulus of elasticity of the two components are matched to the contour of the interlocking index geometry components such that when the overtorque occurs, the at least second operating state is forcibly assumed.

5. The indirect rear viewing system (1) according to claim 4, **characterized in that** a first index geometry component is designed as a groove / a channel / a corrugation (20), and a second index geometry component is designed as a projection / a rib / a prominence (21).

6. The indirect rear viewing system (1) according to claim 5, **characterized in that** the groove / the channel / the corrugation (20) is present on the supporting element (2), and the projection (21) is present on the adjusting element (6), or vice versa.

7. The indirect rear viewing system (1) according to claim 6, **characterized in that** the limit torque is at least 10 % larger than the torque, which occurs in the first operating state, which is required in order to keep the supporting element (3) stable relative to the adjusting element (6).

8. The indirect rear viewing system (1) according to claim 7, **characterized in that** the projection / the rib / the prominence (21) engages into the groove / the channel / the corrugation 20 without any play.

9. The indirect rear viewing system (1) according to claim 8, **characterized in that** the projection (21) has, in a cross-section orthogonal to the longitudinal axis of the groove / the channel / the corrugation (20), a beveled side which is contoured in order to make a line contact with the material forming the groove / the channel / the corrugation (20).

10. The indirect rear viewing system (1) according to claim 9, **characterized in that** the projection (21) has a conical contour or a truncated cone contour or a contour in the form of a spherical segment or a spherical / ellipsoidal contour at least in the active area.

11. The indirect rear viewing system (1) according to claim 10, **characterized in that** the index geometry (18) is composed of two component parts, at least one of which is formed in an elastic manner.

## Revendications

1. Système de rétrovision indirect (1) pour un véhicule automobile, avec un élément de support (2) pour la fixation d'au moins un élément de réflexion (3), dans lequel l'élément de support (2) comporte une zone de couplage (11) pour la fixation/l'application à position variable sur un élément de réglage (6) pouvant être attaché sur le véhicule de son côté, dans lequel la zone de couplage (11) est en contact avec une zone de contre-contact (8) de l'élément de réglage (6), dans lequel des moyens d'arrêt de rotation (19) s'engageant les uns dans les autres sont présents sur l'élément de support (2) et sur l'élément de réglage (6), **caractérisé en ce que** les moyens d'arrêt de rotation (19) forment une géométrie d'index (18) qui, dans un premier état de fonctionnement, permet un réglage de l'élément de support (3) par rapport à l'élément de réglage (6) autour de deux axes de rotation (25, 26) transversaux l'un par rapport à l'autre et, dans au moins un deuxième état de fonctionnement, permet un changement de position de base de l'élément de support (2) par rapport à l'élément de réglage (6) autour d'un troisième axe de rotation (27) qui est orienté transversalement par rapport aux deux autres axes de rotation (25, 26).

2. Système de rétrovision indirect (1) selon la revendication 1, **caractérisé en ce que** l'élément de support (2) et l'élément de réglage (6) sont adaptés l'un à l'autre par leurs géométrie, épaisseur de matériau et nature de matériau de sorte qu'en présence d'un surcouple qui est supérieur à un couple limite prédéterminé, le passage du premier état de fonctionnement au deuxième état de fonctionnement est autorisé/forcé.

3. Système de rétroaction indirect (1) selon la revendication 2, **caractérisé en ce que** l'élément de réglage (6) comporte une zone de raccordement bombée (7) qui forme la zone de contre-contact (8).

4. Système de rétrovision indirect (1) selon la revendication 3, **caractérisé en ce que** l'élément de support (2) et l'élément de réglage (6) sont conçus de manière ciblée de sorte que les propriétés de réinitialisation et le module d'élasticité des deux composants sont adaptés au contour des composants de géométrie d'index s'engageant de sorte que, en présence du surcouple, le au moins deuxième état de fonctionnement est adopté de force.

5. Système de rétrovision indirect (1) selon la revendication 4, **caractérisé en ce qu'**un premier composant de géométrie d'index est conçu en tant que rainure/rigole/strie (20) et un deuxième composant de géométrie d'index est conçu en tant que saillie/nervure/surélévation (21).

6. Système de rétrovision indirect (1) selon la revendication 5, **caractérisé en ce que** la rainure/rigole/nervure (20) est présente sur l'élément de support (2) et la saillie (21) est présente sur l'élément de réglage (6) ou inversement.

7. Système de rétrovision indirect (1) selon la revendication 6, **caractérisé en ce que** le couple limite est supérieur d'au moins 10 % au couple apparaissant dans le premier état de fonctionnement, couple qui est nécessaire pour maintenir la stabilité de l'élément de support (3) par rapport à l'élément de réglage (6).

8. Système de rétrovision indirect (1) selon la revendication 7, **caractérisé en ce que** la saillie/la nervure/la surélévation (21) s'engage sans jeu dans la rainure/rigole/strie (20).

9. Système de rétrovision indirect (1) selon la revendication 8, **caractérisé en ce que** la saillie (21) comporte, dans une section transversale orthogonale à l'axe longitudinal de la rainure/rigole/strie (20), un côté biseauté qui a un contour pour entrer en contact linéaire avec le matériau formant la rainure/rigole/strie (20).

10. Système de rétrovision indirect (1) selon la revendication 9, **caractérisé en ce que** la saillie (21) comporte, au moins dans la zone active, un contour conique ou un contour tronconique ou un contour en forme de section de sphère ou un contour sphérique/ellipsoïdal.

11. Système de rétrovision indirect (1) selon la revendication 10, **caractérisé en ce que** la géométrie d'index (18) est composée de deux composants, dont au moins un est élastique.
